Europäisches Patentamt

European Patent Office

Office européen des brevets

(19)

(11) Numéro de publication: **0 364 337**
**A2**

(12) # DEMANDE DE BREVET EUROPEEN

(21) Numéro de dépôt: 89402738.2

(22) Date de dépôt: 04.10.89

(51) Int. Cl.⁵: **C07F 7/22** , **C03C 3/32** , **C03C 4/00**

(30) Priorité: 14.10.88 FR 8813529

(43) Date de publication de la demande:
**18.04.90 Bulletin 90/16**

(84) Etats contractants désignés:
**AT BE CH DE ES FR GB GR IT LI LU NL SE**

(71) Demandeur: **RHONE-POULENC CHIMIE**
**25, quai Paul Doumer**
**F-92408 Courbevoie Cédex(FR)**

(72) Inventeur: **Bonneau, Lionel**
**5, Avenue du Parc**
**F-30340 Salindres(FR)**

(74) Mandataire: **Dubruc, Philippe et al**
**RHONE-POULENC CHIMIE Service Brevets**
**Chimie 25, quai Paul-Doumer**
**F-92408 Courbevoie Cédex(FR)**

(54) **Organofluorures d'étain et leur procédé de préparation.**

(57) L'invention concerne des organofluorures d'étain et leur procédé de préparation.

Ces organofluorures d'étain sont préparés par un procédé comportant la réaction d'un agent fluorant sur un substrat stannique et caractérisé en ce qu'il comprend en outre les étapes suivantes :

- on mélange l'organofluorure d'étain obtenu par la réaction précitée dans un solvant immiscible avec l'agent fluorant mais solubilisant l'organofluorure d'étain ;

- ensuite ou simultanément, on porte le milieu ainsi obtenu à une température suffisante pour libérer l'agent fluorant ;

- on refroidit la solution et on cristallise l'organofluorure d'étain ;

Les produits obtenus peuvent être utilisés notamment dans la fabrication de vitrages isolants.

## ORGANOFLUORURES D'ETAIN ET LEUR PROCEDE DE PREPARATION

La présente invention concerne de nouveaux organofluorures d'étain, plus particulièrement un dibutyldifluorure d'étain et leur procédé de préparation.

Le dibutyldifluorure d'étain (DBTF) est un produit qui est utilisé notamment dans la fabrication de vitrages isolants permettant la réflexion du rayonnement infrarouge.

Dans cette application (HARD COAT), le DBTF est déposé sur le verre en une couche d'épaisseur bien déterminée. De ce fait, il est nécessaire de disposer d'un produit qui ne soit pas hétérogène, c'est-à-dire d'un produit ayant une granulométrie bien déterminée, au voisinage de 10 $\mu$m, une morphologie bien spécifique, à savoir sous forme de plaquettes et enfin se présentant à l'état de poudre, cette poudre devant être non collante.

On connaît déjà plusieurs procédés de préparation d'organofluorures d'étain et du DBTF notamment. Ces procédés consistent à faire réagir un agent fluorant sur un substrat stannique.

Les agents fluorants sont par exemple des fluorures alcalins tel que KF, le fluorure d'ammonium, l'acide fluorhydrique aqueux ou anhydre.

Comme substrats stanniques, on peut citer l'oxyde de dibutyl étain, le chlorure de dibutylétain, l'acétate de dibutylétain.

La réaction peut se faire en milieu aqueux ou méthanolique par exemple avec HF aqueux, ou bien en milieu HF anhydre seulement.

Tous les procédés qui viennent d'être évoqués, outre leurs inconvénients propres, présentent un défaut majeur commun. En effet ils donnent des produits à morphologie très variable.

Le problème qui se pose ici est donc la préparation de produits ayant une morphologie contrôlée, plus précisément de produits se présentant essentiellement sous forme de plaquettes et ayant une répartition granulométrique resserrée.

L'objet de l'invention est donc la préparation de tels produits.

Dans ce but, le procédé selon une première variante de l'invention de préparation d'un organofluorure d'étain est du type comportant la réaction d'un agent fluorant sur un substrat stannique et il est caractérisé en ce qu'il comprend en outre les étapes suivantes :
- on mélange l'organofluorure d'étain obtenu par la réaction précitée dans un solvant immiscible avec l'agent fluorant mais solubilisant l'organofluorure d'étain ;
- ensuite ou simultanément, on porte le milieu ainsi obtenu à une température suffisante pour libérer l'agent fluorant ;
- on refroidit le milieu et on cristallise l'organofluorure d'étain.

Le procédé selon une seconde variante de l'invention de préparation d'un organofluorure d'étain est caractérisé en ce qu'on mélange tout d'abord un substrat stannique, un agent fluorant et un solvant immiscible avec l'agent fluorant mais solubilisant l'organofluorure d'étain à préparer, puis, à la fin de la réaction de l'agent fluorant sur le substrat, on chauffe le mélange à un température suffisante pour libérer l'agent fluorant, enfin on refroidit le mélange et on cristallise l'organofluorure d'étain.

Grâce au procédé de l'invention, on obtient un produit dont les cristaux se présentent essentiellement sous forme de plaquettes et sont de grande pureté.

Plus précisément, les alkyldifluorures d'étain de l'invention sont caractérisés en ce qu'ils se présentent sous forme de plaquettes de longueur comprise entre 25 et 100 $\mu$m, de largeur comprise entre 5 et 20 $\mu$m et d'épaisseur comprise entre 0,02 et 1 $\mu$m et en ce qu'ils présentent un spectre ATD ayant un pic exothermique aux environs de 350° C.

L'invention concerne enfin plus particulièrement un dibutyldifluorure d'étain ayant les mêmes caractéristiques de morphologie et de spectre ATD que celles données ci-dessus.

L'invention concerne enfin l'utilisation des produits décrits ci-dessus ou préparés par les procédés mentionnés plus haut à la fabrication de vitrages isolants.

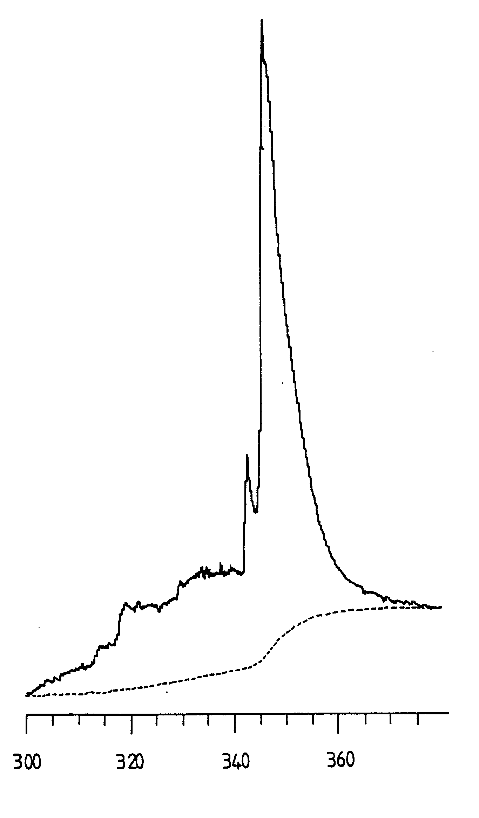

D'autres caractéristiques et avantages de l'invention seront mieux compris à la lecture de la description qui va suivre et du dessin annexé pour lequel la figure unique est un spectre d'analyse thermique différentielle (ATD) d'un dibutyldifluorure d'étain selon l'invention.

Comme on l'a indiqué plus haut, le procédé de l'invention consiste essentiellement à faire subir un traitement par un solvant à un organofluorure d'étain préalablement préparé ou préparé in situ.

Cet organofluorure peut être de tout type. Habituellement, il s'agit d'un alkylfluorure d'étain, plus particulièrement de dialkylfluorure d'étain. De même, on met généralement en oeuvre des organodifluorures d'étain.

Plus particulièrement, le procédé de l'invention s'applique aux méthyl- ou diméthylfluorures, éthyl- ou diéthylfluorures, propyl- ou dipropylfluorures, butylfluorures, octyl- ou dioctylfluorures d'étain et spécialement, comme on l'a vu précédemment, au dibutyldifluorure d'étain.

Il est important de noter que le mode de préparation de l'organofluorure d'étain peut être quelconque. En particulier on entend par là qu'on peut partir de tout substrat stannique et de tout agent fluorant convenables et notamment de ceux qui ont été indiqués plus haut.

Toutefois, le procédé de l'invention s'applique particulièrement bien au cas où l'agent fluorant est l'acide fluorhydrique ou le fluorure d'ammonium. C'est le cas notamment où l'organofluorure d'étain est préparé par réaction d'un substrat de type organochlorure d'étain par exemple avec HF dans l'eau et en présence d'un alcool, tel que le méthanol.

Ce peut être aussi le cas où un substrat, de même type notamment, est mis à réagir avec HF anhydre.

L'invention s'applique bien enfin au cas ou l'on utilise comme agent fluorant un fluorure d'ammonium et en particulier le bifluorure d'ammonium $NH_4F$, HF en solution aqueuse ou alcoolique.

Ces trois cas qui viennent d'être envisagés s'appliquent particulièrement bien aux alkylchlorures d'étain.

La caractéristique principale de l'invention réside dans le traitement d'un organofluorure ainsi préparé avec un solvant qui doit présenter les caractéristiques données ci-dessous.

Tout d'abord, ce solvant doit être immiscible avec l'agent fluorant qui a été utilisé dans la réaction avec le substrat. Par ailleurs, comme cela a été vu plus haut, le procédé selon l'invention comprend une étape de chauffage dans laquelle on chauffe le milieu qui contient notamment l'organofluorure d'étain, le solvant et l'agent fluorant pour l'amener à une température telle qu'il y ait libération de l'agent fluorant.

Ceci implique donc que le solvant présente une température d'ébullition telle qu'elle soit supérieure à la température précitée.

Dans le cas de l'utilisation comme agent fluorant de l'acide fluorhydrique ou d'un fluorure d'ammonium, la température d'ébullition du solvant devra être supérieure à celle de cet agent. En principe, le procédé sera d'une mise en oeuvre d'autant plus facile que la différence des températures d'ébullition sera grande.

A titre d'exemple, pour fixer les idées et dans le cas où HF est l'agent fluorant, la température d'ébullition du solvant doit être d'au moins 110°C de préférence d'au moins 120°C.

D'autre part ce solvant doit présenter deux conditions par rapport à l'organofluorure d'étain. Le solvant doit tout d'abord pouvoir solubiliser l'organofluorure que l'on cherche à préparer. Ensuite, il doit être tel qu'il permette de cristalliser l'organofluorure. Enfin, d'une manière préférentielle, le solvant doit être inerte vis-à-vis de l'agent fluorant.

Généralement, les solvants convenables sont des solvants aprotiques et peu ou pas polaires.

On peut citer comme famille de solvants utilisables dans le cadre de l'invention les hydrocarbures aromatiques et plus particulièrement les hydrocarbures aromatiques chlorés.

On peut citer à titre d'exemple le chlorobenzène, le dichlorobenzène, notamment l'orthodichlorobenzène, le xylène, le toluène.

Les différentes étapes du procédé selon l'invention vont maintenant être décrites plus précisément.

Le traitement selon la première variante consiste à mélanger le solvant et l'organofluorure d'étain. Ce mélange peut se faire en introduisant l'organofluorure préalablement préparé, c'est-à-dire séparé de son milieu réactionnel, voire séché, dans la quantité nécessaire de solvant. Plus généralement, on procède à ce traitement immédiatement après la réaction de formation de l'organofluorure.

Dans ce cas on introduit le solvant dans le milieu réactionnel comprenant l'organofluorure formé, le reste d'agent fluorant et éventuellement une phase aqueuse ou alcoolique suivant le mode de préparation utilisé.

Une fois l'organofluorure d'étain mélangé avec le solvant ou mis en contact avec celui-ci, on chauffe le mélange ainsi obtenu de manière à le porter à une température telle que l'on observe une libération de l'agent fluorant.

Il est à noter qu'il est possible de procéder simultanément au mélange du solvant et de l'organofluorure et au chauffage.

A cette étape du procédé, l'agent fluorant encore présent et qu'on libère peut être celui qui reste dans le milieu réactionnel de préparation de l'organofluorure, et/ou celui qui reste présent, notamment à titre d'impureté, avec l'organofluorure en particulier lorsque celui-ci a été préalablement préparé.

La température atteinte lors du chauffage dépend de l'agent fluorant et du solvant. Elle est habituellement comprise 110 et 150°C en particulier dans le cas où l'agent fluorant est HF.

Le chauffage est maintenu jusqu'à ce qu'on n'observe plus de dégagement de l'agent fluorant.

A cette étape du procédé, on a généralement obtenu une solution de l'organofluorure d'étain dans le solvant. On procède alors à un refroidissement de cette solution pour provoquer une cristallisation de l'organofluorure.

Une fois la cristallisation terminée, on peut alors séparer le produit du solvant par tout moyen convenable. Le solvant peut être recyclé dans le procédé.

Il est ensuite préférable de laver le produit ainsi obtenu pour éliminer notamment les traces de solvant. Ce lavage se fait généralement avec un second solvant.

Ce second solvant doit être miscible au premier et présenter de préférence un point d'ébullition bas.

C'est ainsi qu'on peut le choisir dans le groupe des hydrocarbures aliphatiques ou alicycliques halogénés et des cétones.

On peut citer plus particulièrement les carbures aliphatiques ou alicycliques halogénés à chaîne courte en $C_1$-$C_4$, notamment ceux vendus sous la marque FLUGENE.

Une fois lavé, le produit est séché par tout moyen connu par exemple par balayage d'air sec, par exemple à une température d'environ 70°C dans le cas du DBTF.

On peut éventuellement ajuster la granulométrie du produit ainsi obtenu par un broyage, cette granulométrie étant fonction de l'application recherchée du produit.

Comme cela a été vu plus haut, il existe une seconde variante de l'invention. Celle-ci diffère de la première qui vient d'être décrit essentiellement par la première étape.

En effet, dans un premier temps on forme un mélange comprenant le substrat stannique, l'agent fluorant et le solvant. On se place, une fois le mélange formé, dans des conditions telles qu'il y ait réaction entre le substrat et l'agent fluorant pour former l'organofluorure d'étain. Pour la bonne marche de la réaction, il est préférable d'assurer une bonne agitation du mélange.

On peut vérifier le déroulement et la fin de la réaction de fluoration en suivant la formation ou le dégagement des sous-produits de cette réaction, par exemple de HCl dans le cas d'une fluoration avec HF d'un substrat sous forme chlorure.

Une fois la réaction terminée, on chauffe alors le mélange pour provoquer la libération de l'agent fluorant résiduel.

A partir de cette étape, on procède alors comme dans le cas de la première variante. Bien entendu tout ce qui a été décrit alors pour cette première variante s'applique aussi ici pour la seconde.

Comme on l'a vu plus haut l'invention permet la préparation de produits qui présentent une morphologie particulière.

Ainsi dans le cas des alkyldifluorures d'étain, ceux-ci se présentent sous forme de plaquette. Pour ce qui est de la morphologie uniline, ces plaquettes sont sensiblement de forme rectangulaire. Elles ont généralement une longueur qui varie entre environ 25 et environ 100 μm. Leur largeur est comprise entre environ 5 et 20 μm. Leur épaisseur varie entre 0,02 et 1 μm.

Par ailleurs, ces produits sont aussi caractérisés par le fait qu'ils présentent un spectre ATD (Analyse Thermique Différentielle) ayant un pic exothermique correspondant à la fin de décomposition du fluorure d'alkylétain situé aux environs de 350°C généralement à 350 ± 20°C.

Les spectre caractéristique est obtenu dans les conditions suivantes d'analyse :
- balayage à l'azote
- montée en température de 5° par minute jusqu'à 600°C
- sensibilité ATD 0,2 mV

Comme on l'a vu plus haut, le procédé de l'invention donne accès à un dibutyldifluorure d'étain présentant les caractéristiques de morphologie et d'ATD qui viennent d'être indiquées.

On a pu constater qu'un tel DBTF était particulièrement bien adapté à l'application HARD COAT.

Par ailleurs, le DBTF selon l'invention a une température de fusion de 158°C.

Des exemples concrets vont maintenant être donnés.

## EXEMPLE 1

500 g de chlorure de dibutylétain (DCTB) sont mis en contact avec 500 g d'HF anhydre dans un réacteur agité. Le suivi du dégagement d'HCl permet de vérifier la fin de la réaction de fluoration conduisant à une solution du fluorure de dibutylétain dans l'HF anhydre.

On alimente le réacteur en orthodichlorobenzène conjointement à la distillation d'HF anhydre. On maintient ainsi un volume constant dans le réacteur. Après introduction de la totalité du solvant, la température est portée à 120°C. Le fluorure de dibutylétain est alors en solution et l'HF anhydre résiduel s'échappe. Après d'absence d'émanation d'HF, la solution de fluorure de dibutylétain dans l'orthodichlorobenzène est véhiculée dans un cristallisoir. Le refroidissement de la solution dès 110°C permet d'amorcer la cristallisation du fluorure de dibutylétain. Le lavage est assuré par passage de FLUGENE 113 ou de chlorure de méthylène et suivi d'un séchage à l'air sec à 70°C. On obtient ainsi 420 g de fluorure de dibutylétain.

Ce produit se présente sous forme de plaquettes de 50 μm sur 15 μm et d'épaisseur de 0,5 μm. La figure annexée correspond au spectre ATD de ce produit, spectre établi dans les conditions ci-dessus. L'échelle donnée en abscisse est celle des températures en °C. On voit très nettement un pic exothermique vers 350°C.

## EXEMPLE 2

On procède exactement de la même manière que dans l'exemple 1 mais avec l'orthoxylène à titre de solvant. On obtient la même quantité de produit avec la même morphologie que celui de l'exemple 1.

EXEMPLE 3

Sur un pied de cuve de 500 g d'HF anhydre à -10°C, on introduit une solution de 500 g de DCTB dans un litre d'orthoxylène. Le réacteur est monté en température jusqu'à 25°C sous agitation et sous reflux d'HF. On suit le dégagement d'HCl pour suivre l'avancement de la réaction. A la fin du dégagement d'HCl, on monte la température à 120°C en arrêtant le reflux et on dégage ainsi le milieu fluorant. On obtient une solution de DBTF dans l'orthoxylène que l'on refroidit pour cristallisation jusqu'à l'ambiante. Après filtration et lavage au chlorure de méthylène et séchage à l'étuve à 70°C, on recueille 400 g de fluorure de dibutylétain de même morphologie que celle du produit de l'exemple 1.

Bien entendu, l'invention n'est nullement limitée aux modes de réalisation décrits qui n'ont été donnés qu'à titre d'exemples. En particulier, elle comprend tous les moyens constituant des équivalents techniques des moyens décrits ainsi que leurs combinaisons si celles-ci sont mises en oeuvre dans le cadre de la protection comme revendiquée.

**Revendications**

1. Alkyldifluorure d'étain caractérisé en ce qu'il se présente sous forme de plaquettes de longueur comprise entre 25 et 100 μm, de largeur comprise entre 5 et 20 μm et d'épaisseur comprise entre 0,02 et 1 μm et en ce qu'il présente un spectre ATD ayant un pic exothermique aux environs de 350°C.

2. Dibutyldifluorure d'étain, caractérisé en ce qu'il se présente sous forme de plaquettes de longueur comprise entre 25 et 100 μm, de largeur comprise entre 5 et 20 μm et d'épaisseur comprise entre 0,02 et 1 μm et en ce qu'il présente un spectre ATD ayant un pic exothermique vers 350°C.

3. Dibutyldifluorure d'étain selon la revendication 2 caractérisé en ce qu'il présente une température de fusion de 158°C.

4. Procédé de préparation d'un organofluorure d'étain, du type comportant la réaction d'un agent fluorant sur un substrat stannique caractérisé en ce qu'il comprend en outre les étapes suivantes :
- on mélange l'organofluorure d'étain obtenu par la réaction précitée dans un solvant immiscible avec l'agent fluorant mais solubilisant l'organofluorure d'étain ;
- ensuite ou simultanément, on porte le milieu ainsi obtenu à une température suffisante pour libérer l'agent fluorant ;
- on refroidit la solution et on cristallise l'organofluorure d'étain ;

5. Procédé de préparation d'un organofluorure d'étain caractérisé en ce qu'on mélange tout d'abord un substrat stannique, un agent fluorant et un solvant immiscible avec l'agent fluorant mais solubilisant l'organofluorure d'étain à préparer puis, à la fin de la réaction de l'agent fluorant sur le substrat, on chauffe le mélange à une température suffisante pour libérer l'agent fluorant, enfin on refroidit le mélange et on cristallise l'organofluorure d'étain.

6. Procédé selon la revendication 4 ou 5, caractérisé en ce que l'agent fluorant est l'acide fluorhydrique, plus particulièrement l'acide fluorhydrique anhydre, ou le fluorure d'ammonium en particulier le bifluorure d'ammonium.

7. Procédé selon l'une des revendications 4 à 6 caractérisé en ce que le solvant est un solvant aprotique, peu ou pas polaire.

8. Procédé selon l'une des revendications 4 ou 7, caractérisé en ce que le solvant est un hydrocarbure aromatique.

9. Procédé selon la revendication 8, caractérisé en ce que le solvant est un solvant chloré.

10. Procédé selon la revendication 8, caractérisé en ce que le solvant est choisi dans le groupe comprenant le chlorobenzène, le dichlorobenzène, le xylène, le toluène.

11. Procédé selon l'une quelconque des revendications 4 à 10, caractérisé en ce que l'organofluorure d'étain est un alkylfluorure d'étain.

12. Procédé selon l'une des revendications 4 à 11, caractérisé en ce qu'on prépare un organodifluorure d'étain.

13. Procédé selon la revendication 11 ou 12, caractérisé en ce qu'on prépare un butylfluorure d'étain notamment un dibutyldifluorure d'étain.

14. Procédé selon l'une des revendications 4 à 13, caractérisé en ce qu'on prépare un alkylfluorure d'étain par réaction de l'acide fluorhydrique anhydre sur un alkylchlorure d'étain.

15. Procédé selon l'une des revendications 4 à 14, caractérisé en ce qu'après séparation du solvant et de l'organofluorure d'étain, on lave celui-ci avec un second solvant.

16. Procédé selon la revendication 15, caractérisé en ce que le second solvant est miscible au premier et présente de préférence un point d'ébullition bas.

17. Procédé selon la revendication 15 ou 16, caractérisé en ce que le second solvant est choisi dans le groupe comprenant les hydrocarbures aliphatiques ou alicycliques halogénés, les cétones.

18. Utilisation dans un procédé de fabrication de vitrages isolants, d'un alkyldifluorure d'étain, notamment d'un dibutydifluorure, selon l'une des revendications 1 à 3 ou préparé par le procédé selon l'une des revendications 4 à 17.

300    320    340    360